# EUROPEAN PATENT SPECIFICATION

(11) **EP 2 492 176 B1**
(45) Date of publication and mention of the grant of the patent: **31.08.2016**
(21) Application number: 12155748.2
(22) Date of filing: 16.02.2012
(51) Int. Cl.: B62J 23/00, B62J 99/00, B62K 21/00

(54) **Front portion structure of saddle-ride type vehicle**
Vorderer Karosserieaufbau eines Sattelfahrzeugs
Structure de partie avant de véhicule à monture à selle

(30) Priority: 25.02.2011 JP 2011040525
(43) Date of publication of application: 29.08.2012
(73) Proprietor: Honda Motor Co., Ltd., Tokyo 107-8556 (JP)
(72) Inventor: Yokoi, Motoharu, Wako-shi, Saitama 351-0193 (JP); Matano, Kunihiko, Wako-shi, Saitama 351-0193 (JP); Takahashi, Akira, Wako-shi, Saitama 351-0193 (JP)
(74) Representative: Stevens, Jason Paul

(56) References cited:
- JP-A- 11 079 039
- JP-A- 2006 182 116

## Description

The present invention relates to an improvement in a front portion structure of a saddle-ride type vehicle.

A saddle-ride type vehicle having a handle stopper In a front portion of the vehicle is known, where the handle stopper Is configured to restrict a steering angle of a handlebar (see Figure 1 of Japanese Patent Application Publication No. Hei 11-79039, for example).

As shown in Fig. 1 of Japanese Patent Application Publication No. Hei 11-79039, and using the reference numbers of Japanese Patent Application Publication No. Hei 11-79039, a steering shaft (3) is rotatably inserted into a head pipe (2). A lower bracket (4) extending between left and right fork tubes (6) which support a front wheel is attached to a lower end of the steering shaft (3). A fork stopper (12) protrudes from the lower bracket (4). In addition, frame stoppers (11) protrude on a front side and a lateral side of a lower end of the head pipe (2). The fork stopper (12) is arranged between the two frame stoppers (11). The handle stopper constituted of the frame stoppers (11) and the fork stopper (12) is arranged on the right side in a direction of width of the vehicle. Cables (13) such as a throttle cable are arranged on the left side,in the direction of width of the vehicle, which is the opposite side from the handle stopper.

As described above, with the technique of Japanese Patent Application Publication No. Hei 11-79039, the handle stopper and the cables are arranged separately on the right and left sides in the direction of width of the vehicle. Thereby, the handle stopper and the cables (hereinafter referred to as "flexible members") are prevented from interfering with each other.

In the aforementioned structure, the flexible members are routed on one of the left and right sides In the direction of width of the vehicle, and thus there is a limitation on the routing of the flexible members.

An alternative form of a front structure of a motorcycle is disclosed in JP 2006-182116, on which the preamble of claim 1 is based.

It is an object of at least the preferred embodiment of the present invention to provide a technique with which design freedom related to flexible member routing can be enhanced in a saddle-ride type vehicle provided with a handle stopper.

According to a first aspect of the present invention, there is provided a front portion structure of a saddle-ride type vehicle including a head pipe provided in a vehicle body frame, a steering shaft rotatably supported by the head pipe and having a handlebar attached to an upper end of the steering shaft, a bridge member provided at a lower end portion of the steering shaft, a fork member extending from the bridge member and supporting a front wheel, a handle stopper protruding upward from a position on the bridge member close to the head pipe and configured to restrict a steering angle of the handlebar by contacting the vehicle body frame, and a flexible member extending from equipment around the handlebar above the handle stopper and connected to equipment provided on a vehicle body side, wherein a stopper cover provided between the handle stopper and the flexible member and configured to guide the flexible member away from the handle stopper is attached to the vehicle body frame or the bridge member; characterized in that the stopper cover has a tapered face which Is gradually made close to the steering shaft in an upward direction.

According to this aspect of the present invention, the stopper cover is attached to the vehicle body frame or the bridge member. When the handlebar is steered to the left or to the right, the distance between a portion of the handlebar on one of the left and right sides and a portion of the vehicle body on the other of the left and right sides thereof varies. Thus, the flexible member which is fixed to the portion of the handlebar at one side of the handlebar, extends from the portion of the handlebar on the one side to the portion of the vehicle body on the other side, and is then fixed on the portion of the vehicle body on the other side, is strained or pushed so that a slack amount thereof is changed.

In a countermeasure for avoiding interference between a handle stopper and a flexible member during steering of a handlebar, the handle stopper and the flexible member have been conventionally arranged on different sides from each other across a head pipe, that is, on one side and the other side in the direction of width of the vehicle. According to the countermeasure, the flexible member is arranged on one of the left and right sides in the direction of width of the vehicle, and thus the design freedom related to routing of the flexible member is restricted.

However, in this aspect of the present invention, since the stopper cover is attached to the vehicle body frame or the bridge member, the flexible member is protected by the stopper cover. Thus, there is no concern that the flexible member contacts the handle stopper. Consequently, the flexible member can be routed at any position without considering the position of the handle stopper, and thus the design freedom related to the routing of the flexible member can be enhanced.

Further, with a tapered face as described above, the length of the flexible member can be kept short. in addition, there is no concern about hindering the movement of the flexible member.

Preferably, the stopper cover has an arc shape centred on the steering shaft.

When the handlebar is steered, the flexible member becomes slack or strained because the distance between the handlebar and the vehicle body frame varies, so that the flexible member is moved. However, when the stopper cover has an arc shape centred on the steering shaft, there is no concern about hindering movement of the flexible member.

In a further preferred form, the stopper cover has a flange portion along a lower edge portion of the stopper cover, the flange portion extending outward in a radial direction.

The flange portion can restrict downward movement of the flexible member and guide the flexible member In a preferable direction. In addition, the rigidity of the stopper cover can be enhanced due to the flange portion.

In a further preferred form, the saddle-ride type vehicle includes a front cowl covering a front portion of the head pipe, a front stay is detachably attached to the head pipe, the front cowl is supported by the front stay, and the stopper cover Is attached to the front stay.

With this arrangement, the front stay can be attached to the head pipe after the stopper cover is attached to the front stay in a sub-assembling step, and so workability related to assembling can be enhanced.

Preferably, the saddle-ride type vehicle includes a headlight in front of the head pipe, the front stay is detachably attached to the head pipe, the headlight is supported by the front stay, and the stopper cover is attached to the front stay.

With this arrangement, the front stay can be attached to the head pipe after the stopper cover is attached to the front stay in a sub-assembling step, and so the workability related to assembling can be enhanced.

Preferably, the front stay includes a front-stay base portion fastened to the head pipe and protruding substantially to the front of the vehicle, and a front-stay upward-extending portion extending upward from a front end portion of the front-stay base portion, the stopper cover is attached to the front-stay base portion, and the flexible member is routed In such a manner as to pass below the front-stay base portion.

If the stopper cover were attached to the front-stay upward-extending portion, the size of the stopper cover would increase in height. However, the present arrangement can make the stopper cover compact, because the stopper cover is attached to the lower portion of the front stay.

Preferably, the stopper cover is substantially C-shaped, with the C open to the rear of the vehicle when the handlebar is viewed in an axial direction thereof.

Thus, the stopper cover can be made lighter than in a case where the stopper cover is formed in a circular shape. In addition, the stopper cover can easily be placed around the head pipe in an assembling step, and thus the assembling workability can be enhanced.

A preferred embodiment of the invention will now be described by way of example only and with reference to the accompanying drawings, in which:
Fig. 1 is a left-side view of an embodiment of a motorcycle with a front structure according to the present invention;
Fig. 2 is a view (a front view) taken along the arrow 2 of Fig. 1;
Fig. 3 is a front view of a steering system with a front stay attached thereto;
Fig. 4 is a side view of the front stay;
Fig. 5 is a front view of the front stay;
Fig. 6 is a perspective view of a stopper cover;
Fig. 7 is a plan view of the stopper cover;
Fig. 8 is a cross-sectional view taken along the 8-8 line of Fig. 2;
Fig. 9 is a side view for explaining a structure in which the front stay is attached;
Fig. 10 is a view (a front view) taken along the arrow 10 of Fig. 9;
Fig. 11 is a view of a steering shaft seen in an axial direction thereof for explaining the structure in which the front stay is attached;
Fig. 12 is a cross-sectional view taken along the 12-12 line of Fig. 11;
Fig. 13 is a view for explaining an effect of the stopper cover at a steering angle of 0 degrees;
Fig. 14 is a view for explaining an effect of the stopper cover at the time of steering the handlebar leftward; and
Fig. 15 is a view for explaining an effect of the stopper cover at the time of steering the handlebar rightward.

A mode for carrying out the invention will be described below in detail. In the drawings and the description, terms such as "up," "down," "front," "rear," "left," and "right" indicate directions viewed from the driver riding on a motorcycle. Note that the drawings are to be viewed in a direction in which reference numerals can be read properly.

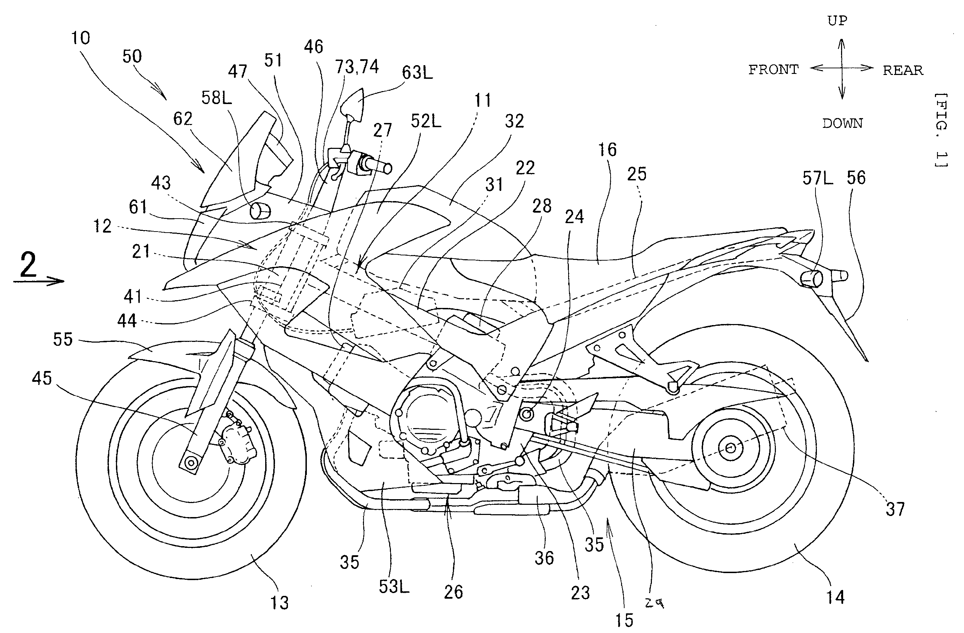

As shown in Fig. 1, a motorcycle 10 includes: a vehicle body frame 11; a steering system 12 which is provided in a front portion of the vehicle body frame 11 and includes a front wheel 13; a rear wheel suspension portion 15 which extends from the vehicle body frame 11 to the rear of the vehicle to be swingable in the up and down directions and has a rear wheel 14 attached to a rear end of the rear wheel suspension portion 15; and a seat 16 which is provided between the front wheel 13 and the rear wheel 14. The motorcycle 10 is a saddle-ride type vehicle, in which a rider rides on the seat 16.

The vehicle body frame 11 is constituted of a head pipe 21 to which the steering system 12 is rotatably attached; a main frame 22 which extends from the head pipe 21 to the rear of the vehicle; and a pivot frame 23 which extends from a rear portion of the main frame 22 downward and supports the rear wheel suspension portion 15 swingably with a pivot shaft 24. The rear wheel suspension portion 15 includes a swing arm 29. A seat rail 25 supporting the seat 16 extends from the rear portion of the main frame 22 to the rear of the vehicle. A cushion unit (not shown) is provided between the seat rail 25 and the rear wheel suspension portion 15. The cushion unit, the swing arm 29, and the pivot shaft 24 form the rear wheel suspension portion 15.

An engine 26 configured to drive the rear wheel 14 is suspended from the main frame 22. The engine 26 is a V-type engine including a front bank 27 and a rear bank 28 which extend in a longitudinal direction of the vehicle. An intake system 31 of the engine 26 is arranged between the front bank 27 and the rear bank 28. A fuel engine tank 32 is provided to the main frame 22 above the intake system 31.

Exhaust pipes 35, 35 extend from in front of the front bank 27 of the engine 26 and from behind the rear bank 28 thereof. The exhaust pipes 35, 35 are coupled to a meeting portion 36 provided below the engine 26. A muffler 37 extends from the meeting portion 36 to the rear of the vehicle.

The steering system 12 includes: a steering shaft 41; upper and lower bridge members 43, 44 which are attached above and below the steering shaft 41 in such a manner as to sandwich the head pipe 21; a handlebar 46 which is attached to the upper bridge member 43; a fork member 45 which extends from the upper bridge member 43 downward, passes through the lower bridge member 44, and extends downward; and the front wheel 13 rotatably attached to a lower end of the fork member 45. The steering system 12 is rotatably provided to the head pipe 21.

A vehicle body cover 50 includes: a front cowl 51 which covers a front portion of the vehicle; left and right side cowls 52L, 52R (only the left side cowl 52L, on the side nearer the reader of the drawing, is shown) which extend from the front cowl 51 to the rear of the vehicle and cover left and right sides of the vehicle; and left and right under cowls 53L, 53R (only the left under cowl 53L, on the side nearer the reader of the drawing, is shown) which continuously extend from the left and right side cowls 52L, 52R downward in the front portion of the vehicle. A meter 47 is arranged on the front of the vehicle relative to the handlebar 46.

A front fender 55 is attached to the fork member 45 above the front wheel 13, and a rear fender 56 covering a rear and upper portion of the rear wheel 14 is attached to a rear end portion of the seat rail 25. Left and right rear blinkers 57L, 57R (only left rear blinker 57L, on the side nearer the reader of the drawing, is shown) are attached to the rear fender 56.

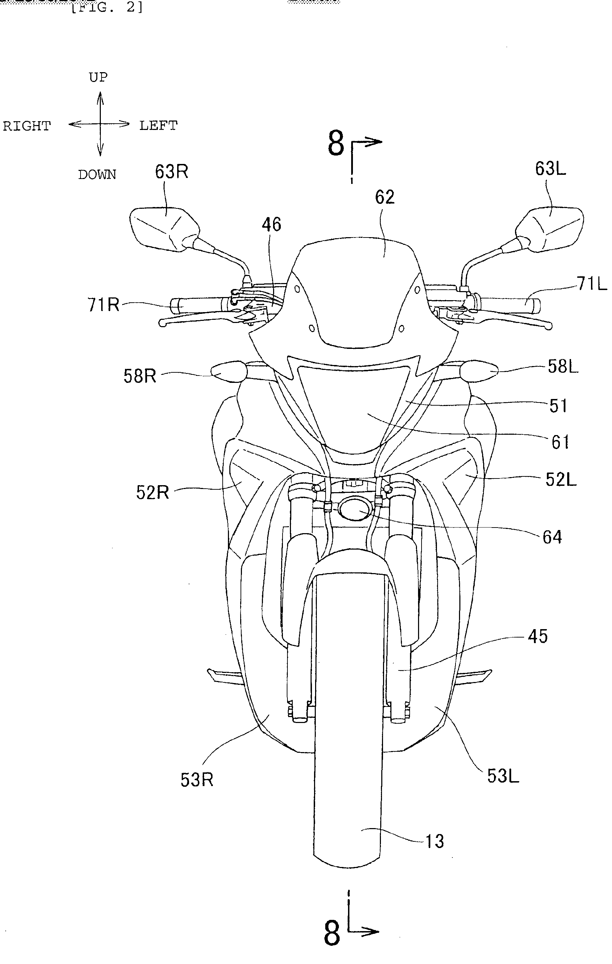

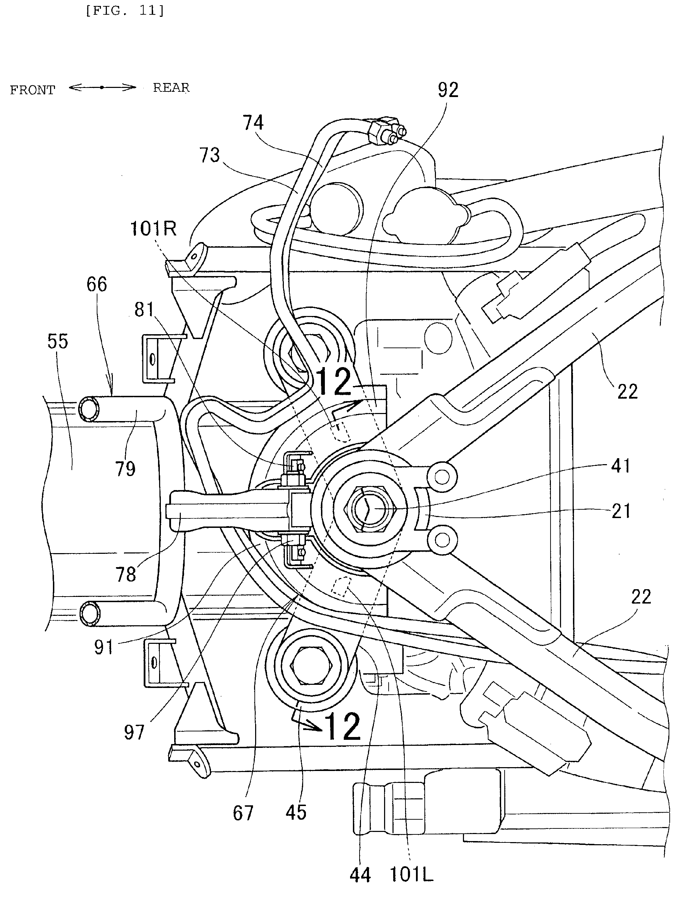

As shown in Fig. 2, the front cowl 51 covering the front portion of the vehicle is provided in the front portion of the vehicle, a headlight 61 is provided in the centre of the front cowl 51 in the direction of width of the vehicle, and a windshield plate 62 as a windshield extends upward from the front cowl 51. In other words, the front cowl 51 covers a portion in front of the head pipe (denoted by reference numeral 21 in Fig. 1) forming a front end portion of the vehicle body frame (denoted by reference numeral 11 in Fig. 11).

The left and right front blinkers 58L, 58R (only left front blinker 58L, on the side nearer the reader of the drawing, is shown) are attached to the front cowl 51. Left and right mirrors 63L, 63R (only left mirror 63L, on the side nearer the reader of the drawing, is shown) are attached to the handlebar 46. A horn 64 is attached to the lower bridge member 44.

Next, a description is given of a state in which the windshield plate 62, the front cowl 51, and the headlight 61 which are provided to a front portion of a vehicle body are removed.

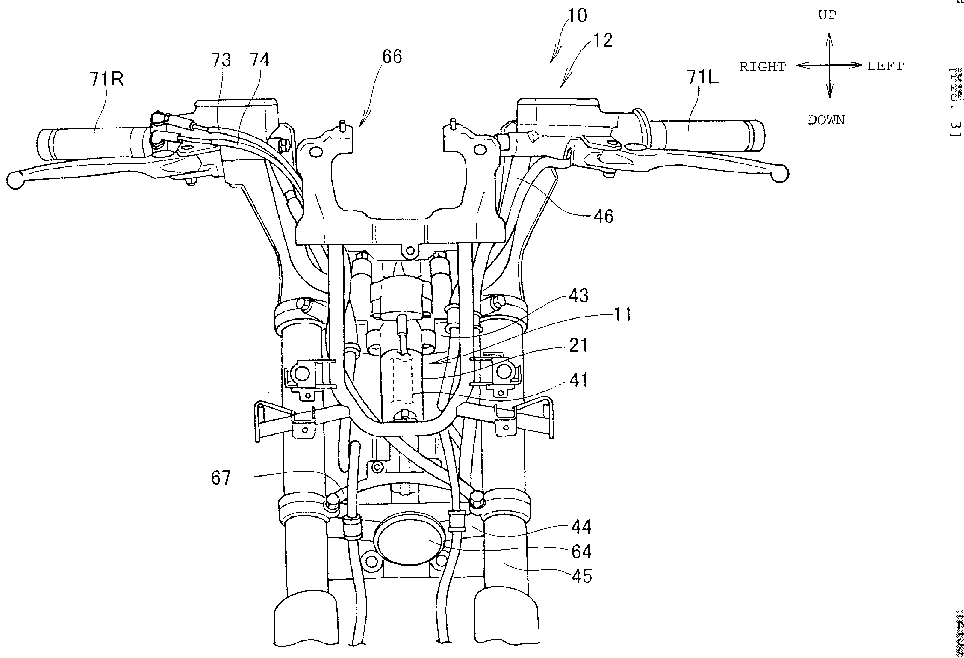

As shown in Fig. 3, the steering system 12 includes as main components: the steering shaft 41 which is rotatably supported by the head pipe 21 provided at the front end portion of the vehicle body frame 11; the upper bridge member 43 which is provided at an upper end of the steering shaft 41; the handlebar 46 which is attached to the upper bridge member 43; the lower bridge member 44 which is arranged at a lower portion of the head pipe 21 to be opposed to the upper bridge member 43 and is attached to a lower end portion of the steering shaft 41; and the fork member 45 which penetrates through the lower bridge member 44 to extend to the upper bridge member 43 and is supported by the upper and lower bridge members 43, 44.

A front stay 66 is provided at the front of the vehicle relative to the head pipe 21, and a stopper cover 67 is attached to the front stay 66 in such a manner as to surround handle stoppers to be described later.

Two throttle cables 73, 74 extend from a vicinity of a right grip 71 R of the handlebar 46. The throttle cables 73, 74 pass in front of the head pipe 21 to extend leftward and downward in the direction of width of the vehicle direction, and then pass in front of the stopper cover 67 to extend to the rear of the vehicle.

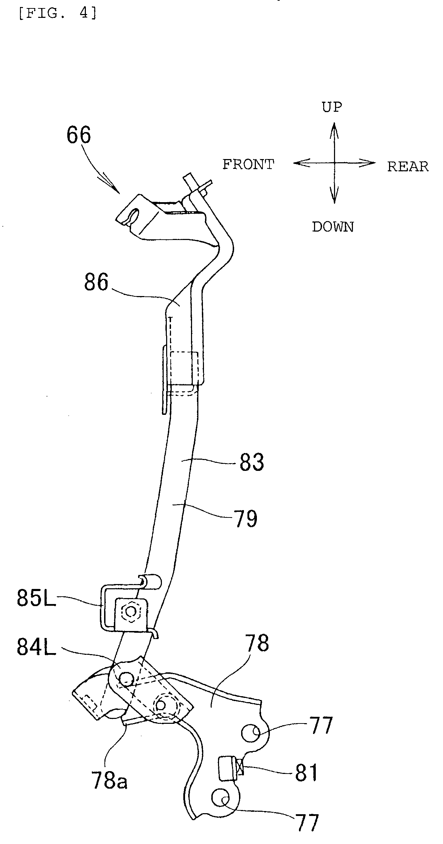

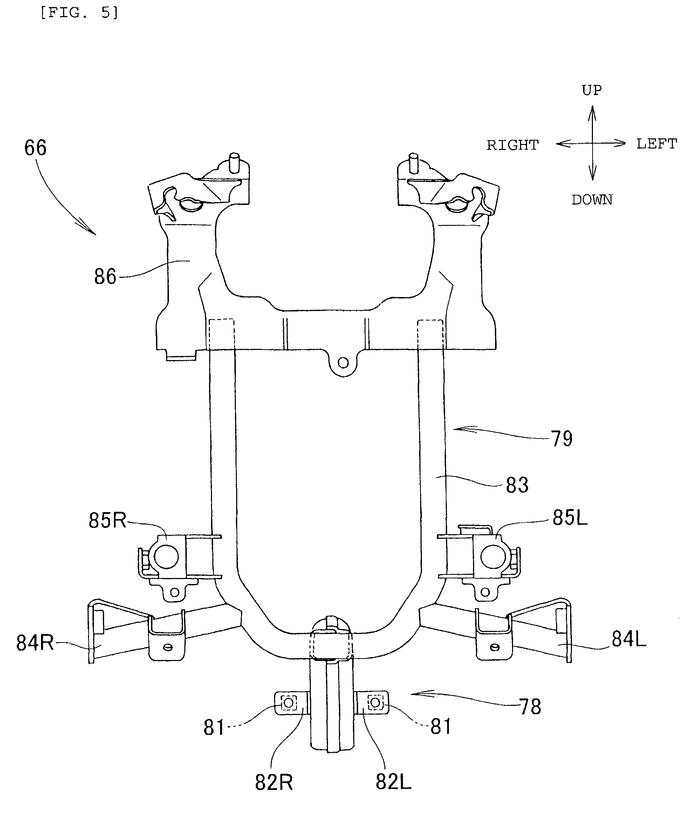

With reference to Figs. 4 and 5, a description will now be given of the front stay 66 which supports members arranged in the front portion of the vehicle, such as the windshield plate 62 and the headlight 61.

As shown in Fig. 4, the front stay 66 includes: a front-stay base portion 78 which includes upper and lower fastening holes 77, 77 for fastening the front stay 66 to the head pipe 21 and protrudes substantially to the front of the vehicle; and a front-stay upward-extending portion 79 which extends upward from a front end portion 78a of the front-stay base portion 78.

As shown in Fig. 5, left and right stay pieces 82L, 82R extend leftward and rightward in the direction of width of the vehicle from the front-stay base portion 78. Weld nuts 81, 81 with which the stopper cover (denoted by reference numeral 67 in Fig. 3) can be fastened are fixedly attached to the stay pieces 82L, 82R.

The front-stay upward-extending portion 79 includes: a U-shaped member 83 which has a substantially U-shape in which the top is open and the bottom is closed; left and right first support portions 84L, 84R which extend leftward and rightward in the direction of width of the vehicle in a lower portion of the U-shaped member 83 and support the front cowl (denoted by reference numeral 51 in Fig. 2); left and right second support portions 85L, 85R which extend leftward and rightward in the direction of width of the vehicle above the first support portions 84L, 84R and support the headlight 61; and a third support portion 86 which is attached to an upper end of the U-shaped member 83 and supports the meter 47 and the windshield plate 62.

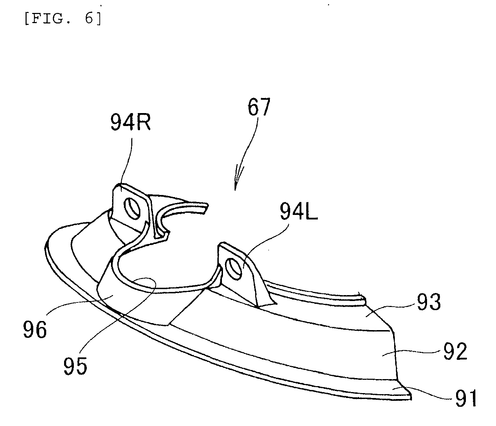

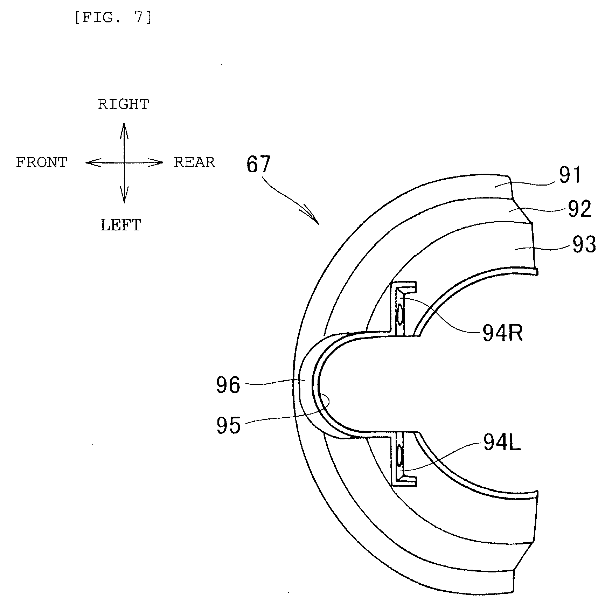

Hereinbelow, the stopper cover 67 will be described with reference to Figs. 6 and 7.

As shown in Fig. 6, the stopper cover 67 has an arc shape and includes: a flange portion 91 extending inward in a radial direction thereof; a tapered portion 92 extending obliquely upward and inward from an inner end of the flange portion 91; an upper plate portion 93 extending inward in the radial direction from an upper end of the tapered portion 92; and left and right attachment portions 94L, 94R protruding upward from the upper plate portion 93.

As shown in Fig. 7, the arc-shaped stopper cover 67 includes: a recessed portion 95 for avoiding interference with the front-stay base portion 78 on the front side in the centre in the direction of width of the vehicle; and a recessed contour wall 96 which stands along the recessed portion 95, continues from the flange portion 91 to the upper plate portion 93 through the tapered portion 92, and joins the left and right attachment portions 94L, 94R.

Since the stopper cover 67 has the flange portion 91 and the recessed contour wall 96, the rigidity of the stopper cover 67 is enhanced in comparison with a case where the flange portion 91 and the recessed contour wall 96 are not provided.

Next, a method for attaching the front stay 66 and a function thereof will be described.

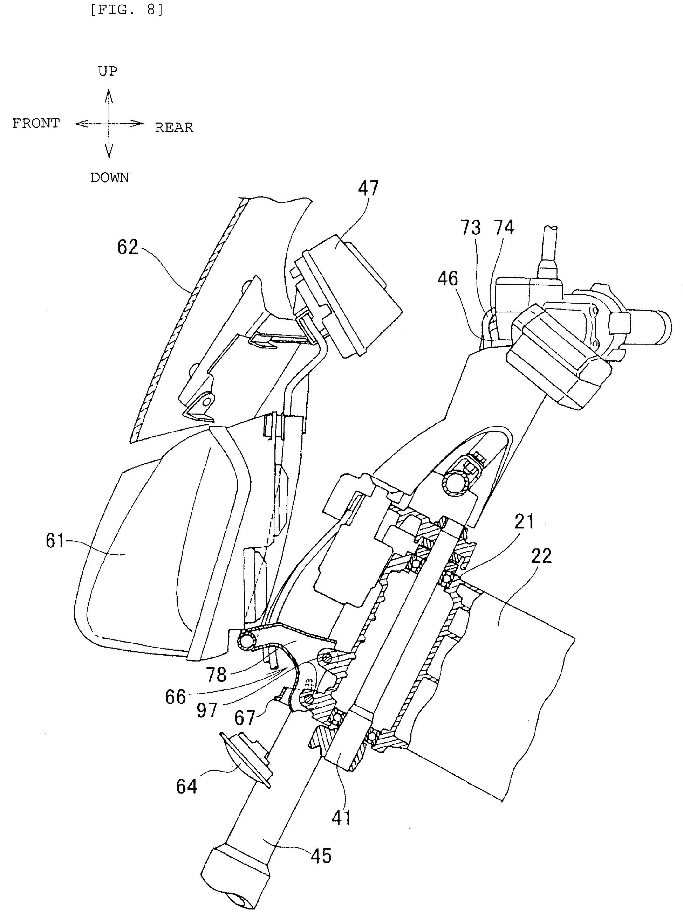

As shown in Fig. 8, the front stay 66 is detachably attached to the head pipe 21 with a fastening member 97. The front stay 66 supports the headlight 61, and supports the meter 47 while supporting the windshield plate 62.

The front stay 66 also supports the front cowl 51.

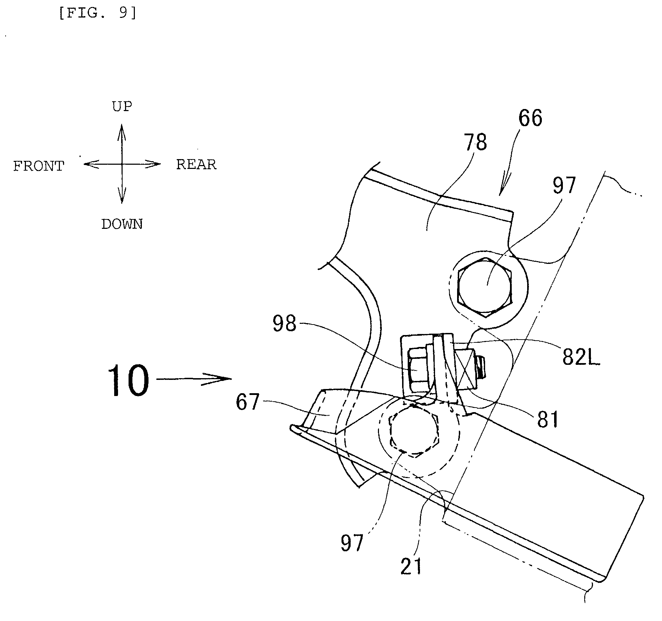

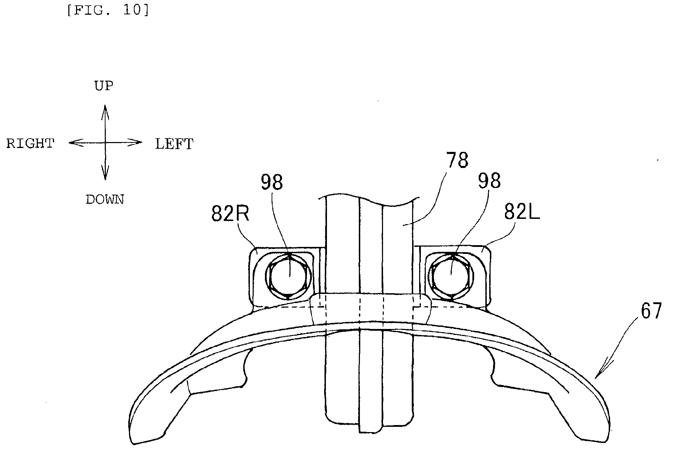

The structure in which the stopper cover 67 is attached to the front stay 66 will be described in detail with reference to Figs. 9 and 10.

As shown in Fig. 9, while a rear face of the stopper cover 67 is placed on front faces of the stay pieces 82L, 82R (only stay piece 82L, on the side nearer the reader of the drawing, is shown) extending in the direction of width of the vehicle from the front-stay base portion 78, a screw member 98 is screwed into one of the weld nuts 81, 81 from the front of the vehicle, so that the stopper cover 67 is attached to the front stay 66. In other words, the stopper cover 67 is attached to the front stay 66 with the screw member 98. In this case, before the front stay 66 is fastened to the head pipe 21, the stopper cover 67 can in advance be attached to the front stay 66.

As shown in Fig. 10, the left and right stay pieces 82L, 82R extend outward in the direction of width of the vehicle from the front-stay base portion 78, and the attachment portions 94L, 94R of the stopper cover 67 are fastened to the weld nuts 81 which are fixedly attached to the left and right stay pieces 82L, 82R with the screw members 98, 98.

In other words, the stopper cover 67 is attached to the front-stay base portion 78.

The front stay 66 is detachably attached to the head pipe 21, and the stopper cover 67 is attached to the front stay 66.

Since the front stay 66 can be attached to the head pipe 21 after the stopper cover 67 has previously been attached to the front stay 66 in a sub-assembling step, the work is not required on a main line, and workability related to assembling can be enhanced. Consequently, increase of assembling man-hours can be kept low even in the vehicle having the stopper cover 67.

Note that the stopper cover 67 is attached to the front stay 66 fixed onto the vehicle body frame 11 in this embodiment, but may be attached to the bridge member 43 or 44 constituting the steering system 12.

Next, a description is given of a state in which the steering shaft 41 and a vicinity thereof are seen from a steering axial direction.

As shown in Fig. 11, the stopper cover 67 has the arc shape and is arranged in such a manner that the centre of the arc-shaped portion coincides with the centre of the steering shaft 41. The stopper cover 67 includes the flange portion 91 extending outward in the radial direction, along a lower edge portion of the stopper cover 67. When the handlebar 46 is viewed in the axial direction, the stopper cover 67 is substantially C-shaped, in which a portion of the stopper cover 67 on the rear side of the vehicle is open.

Since the stopper cover 67 is substantially C-shaped, the stopper cover 67 can be made lighter than in a case where the stopper cover 67 is formed as a circular shape. In addition, the stopper cover 67 can easily be placed around the head pipe 21 in an assembling step, and thus the assembling workability can be enhanced.

The throttle cables 73, 74 as the flexible members extend from a portion of the handlebar 46 on one of the left and right sides in the direction of width of the vehicle (here, the right side), pass by the front of the vehicle relative to the head pipe 21, extend to a portion of the handlebar 46 on the other side (left side) of the left and right sides in the direction of width of the vehicle, and then head for the rear of the vehicle relative to the head pipe 21.

Note that the flexible members are not limited to the throttle cables 73, 74, and may be any member, as long as the member connects equipment mounted around the handlebar 46 and equipment mounted on the vehicle body frame 11 side.

Referring back to Figs. 1 and 8, the throttle cables 73, 74 are routed in such a manner as to pass below the front-stay base portion 78.

If the stopper cover 67 were attached to the front-stay upward-extending portion 79, the size of the stopper cover 67 would increase in height.

In the preferred embodiment, the stopper cover 67 can be made compact, because the stopper cover 67 is attached to the lower portion of the front stay 66.

Referring back to Fig. 11, the stopper cover 67 has the tapered portion 92 as a tapered face which is gradually made close to a rotary shaft (the steering shaft 41) of a steering device in an upward direction. With the tapered portion 92 as described above, the length of the flexible members (throttle cables 73, 74) can be kept short. In addition, there is no concern about hindering the movement of the throttle cables 73, 74.

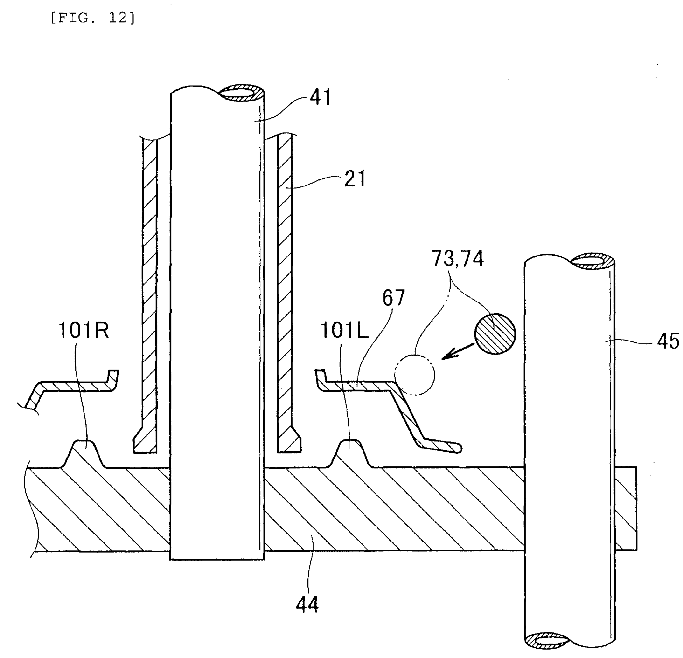

As shown in Fig. 12, handle stoppers 101L, 101R protrude upward from an upper surface of the lower bridge member 44, and the stopper cover 67 is arranged in such a manner as to surround the handle stoppers 101 L, 101 R.

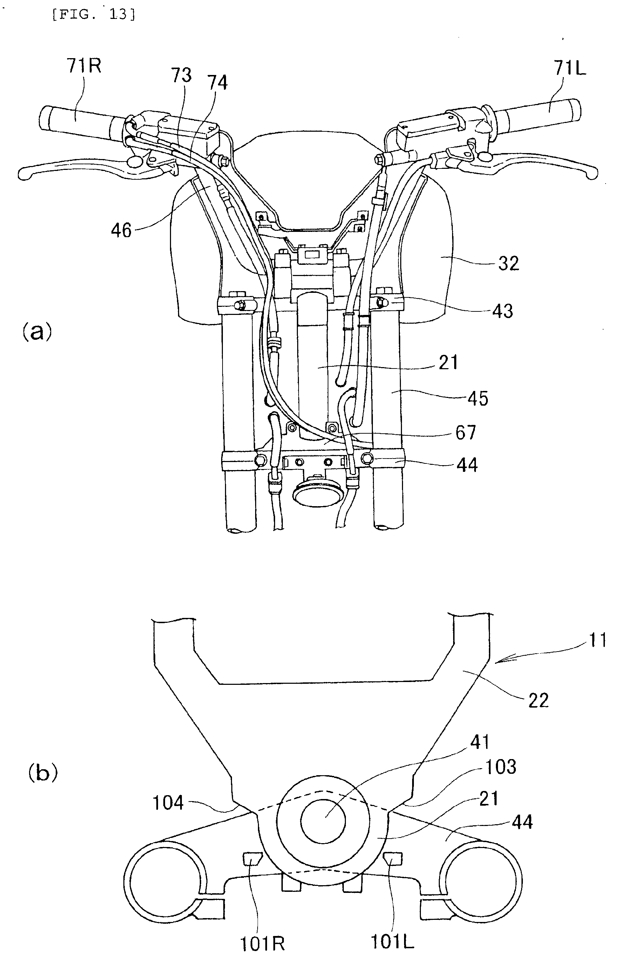

As shown in part b of Fig. 13, the handle stoppers 101 L, 101 R protrude from the lower bridge member 44, and restrict the steering angle of the handlebar 46 by contacting the vehicle body frame 11 on the head pipe 21 side. When the handle stopper 101 L or 101 R contacts a left side surface 103 or a right side surface 104 of the vehicle body frame 11, the steering angle of the handlebar 46 is thereby restricted. In this embodiment, the steering angle of the handlebar 46 is set to be limited to 30 degrees on each of the left and right sides.

Next, a description is given of effects of the stopper cover 67 described above.

Parts a of Figs. 13 to 15 are views showing structures of the front portion of the vehicle viewed in a direction orthogonal to the steering shaft 41, and parts b thereof are views showing steering states of the steering system 12 viewed from above the steering shaft 41.

As shown in part b of Fig. 13, when the steering angle of the handlebar 46 is 0 degrees, the handle stoppers 101 L, 101 R are the same distance away from the stopper surfaces 103, 104 on the left and right sides.

As shown in part a of Fig. 13, the throttle cables 73, 74 extend downward from the vicinity of the right grip 71 R, pass in front of the head pipe 21, and extend along the stopper cover 67 to the rear of the vehicle.

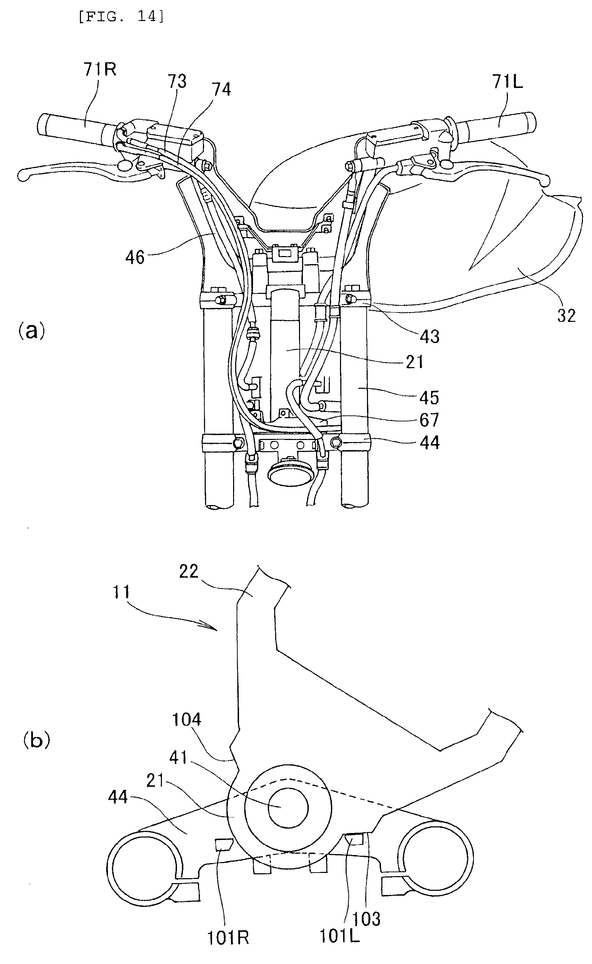

As shown in part b of Fig. 14, when the handlebar 46 is steered leftward to make an angle of 30 degrees, the left handle stopper 101 L contacts the left stopper surface 103. Thereby, the handlebar turning angle is restricted so that the handlebar 46 cannot be turned any further.

At this time, as shown in part a of Fig. 14, the throttle cables 73, 74 which extend downward from the vicinity of the right grip 71 R become slack, pass in front of the head pipe 21, and extend along the stopper cover 67 to the rear of the vehicle. The slack is larger than that in the case of the steering angle of 0 degrees, and generally causes the throttle cables 73, 74 to be away from the stopper cover 67 in many cases.

In a case without providing the stopper cover 67, the slack might cause the throttle cables 73, 74 to contact the left or right handle stopper 101 L or 101 R, which could cause a problem.

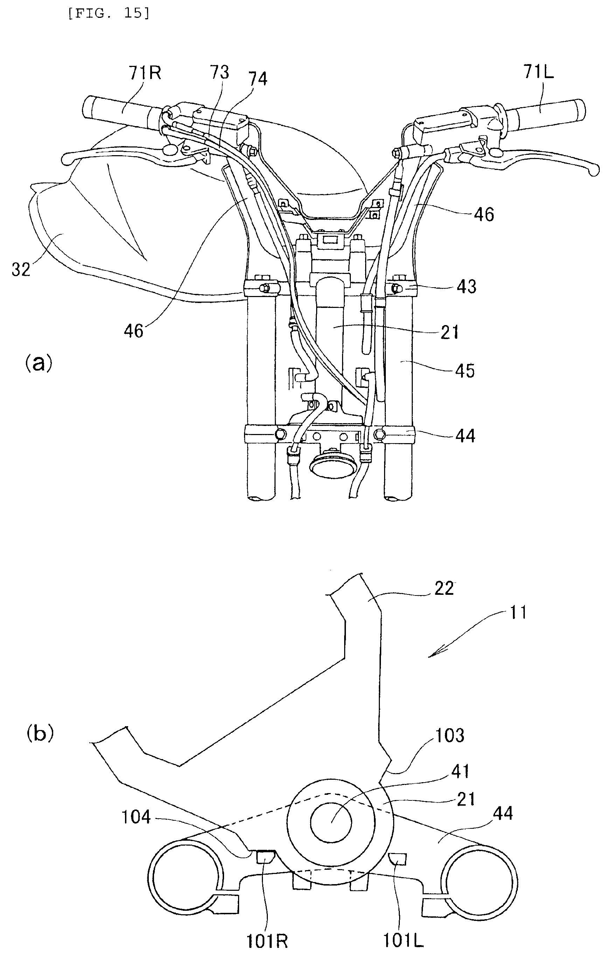

As shown in part b of Fig. 15, when the handlebar 46 is steered rightward to make an angle of 30 degrees, the right handle stopper 101 R contacts the right stopper surface 104. Thereby, the handlebar turning angle is restricted so that the handlebar 46 cannot be turned any further.

At this time, as shown in part a of Fig. 15, the throttle cables 73, 74 are strained near the right grip 71 R, and an amount of slack is reduced in comparison with the case of the steering angle of 0 degrees. Also in this case, if the stopper cover 67 were not provided, the throttle cables 73, 74 might contact the left or right handle stopper 101 L or 101 R, which could cause a problem.

In sum, when the handlebar 46 is steered leftward or rightward, a distance between a portion of the handlebar 46 on the right side and a portion of the vehicle body on the left side varies. The flexible members 73, 74 (the throttle cables 73, 74) which are fixed on the portion of the handlebar 46 on the right side, extend from the portion of the handlebar 46 on the right side to the portion of the vehicle body on the left side, and then are fixed on the portion of the vehicle body on the left side, are strained or pushed as the handlebar 46 is moved, so that a slack amount of the flexible members is changed. The change of the slack amount might cause the flexible members 73, 74 to contact the handle stopper 101 L or 101 R.

In a countermeasure for avoiding interference between a handle stopper and a flexible member in steering a handlebar, the handle stopper and the flexible member have been conventionally arranged on different sides from each other across a head pipe, that is, on one side and the other side in the direction of width of the vehicle. According to this countermeasure, the flexible member is arranged on one of the left and right sides in the direction of width of the vehicle, and thus the design freedom related to routing of the flexible member is restricted.

In the present embodiment, referring to Fig. 8 and Fig. 12 together, the stopper cover 67 is attached to the front stay 66 extending from the vehicle body frame 11, and thus there is no concern that the flexible members 73, 74 will contact the handle stoppers 101 L, 101 R. Thus, the flexible members 73, 74 can be routed at any position without considering the positions of the handle stoppers 101 L, 101 R. Consequently, the design freedom related to the routing of the flexible members 73, 74 can be enhanced.

Referring back to Fig. 11, when the handlebar 46 is steered, the flexible members 73, 74 might be moved because the slack amount of the flexible members 73, 74 is changed due to the change of the distance between the handlebar 46 and the vehicle body frame 11.

In the present embodiment, the stopper cover 67 has the arc shape centred on the steering shaft 41, and thus there is no concern of hindering the movement of the flexible members 73, 74.

Further, the stopper cover 67 has the tapered portion 92 which is gradually made close to the steering shaft 41 which is the rotary shaft of the steering system 12. With the tapered portion 92 as described above, the length of the flexible members 73, 74 can be kept short. In addition, since the stopper cover 67 covers the handle stoppers 101 L, 101 R, there is no concern about hindering the movement of the flexible members 73, 74.

Still further, the stopper cover 67 has the flange portion 91 along the lower edge portion thereof. The flange portion 91 can restrict downward movement of the flexible members 73, 74 and guide the flexible members 73, 74 in a preferable direction. In addition, the rigidity of the stopper cover 67 can be enhanced due to the flange portion 91.

A flange portion provided on a lower edge portion of the stopper cover may be omitted in a third aspect.

The present invention is suitable for a motorcycle (and is described in the context of a motorcycle), but is also applicable to a three-wheeled vehicle. The present invention may also be applied to a general vehicle.

## Claims

1. A front portion structure of a saddle-ride type vehicle including a head pipe (21) provided in a vehicle body frame (11), a steering shaft (41) rotatably supported by the head pipe (21) and having a handlebar (46) attached to an upper end of the steering shaft (41), a bridge member (44) provided at a lower end portion of the steering shaft (41), a fork member (45) extending from the bridge member (44) and supporting a front wheel (13), a handle stopper (101L, 101R) protruding upward from a position on the bridge member (44) close to the head pipe (21) and configured to restrict a steering angle of the handlebar (46) by contacting the vehicle body frame (11), and a flexible member (73, 74) extending from equipment around the handlebar (46) above the handle stopper (101L, 101 R) and connected to equipment provided on a vehicle body side, wherein
a stopper cover (67) provided between the handle stopper (101 L, 101 R) and the flexible member (73, 74) and configured to guide the flexible member (73, 74) away from the handle stopper (101L, 101R) is attached to the vehicle body frame (11) or the bridge member (44);
**characterized in that** the stopper cover (67) has a tapered face (92) which is gradually made close to the steering shaft (41) in an upward direction.

2. The front portion structure of a saddle-ride type vehicle according to claim 1, wherein the stopper cover (67) has an arc shape centred on the steering shaft (41).

3. The front portion structure of a saddle-ride type vehicle according to any claim 1 or claim 2, wherein the stopper cover (67) has a flange portion (91) along a lower edge portion of the stopper cover (67), the flange portion (91) extending outward in a radial direction.

4. The front portion structure of a saddle-ride type vehicle according to any one of claims 1 to 3, wherein
the saddle-ride type vehicle includes a front cowl (51) covering a front portion of the head pipe (21),
a front stay (66) is detachably attached to the head pipe (21),
the front cowl (51) is supported by the front stay (66), and
the stopper cover (67) is attached to the front stay (66).

5. The front portion structure of a saddle-ride type vehicle according to any one of claims 1 to 4, wherein
the saddle-ride type vehicle includes a headlight (61) in front of the head pipe (21),
the front stay (66) is detachably attached to the head pipe (21),
the headlight (61) is supported by the front stay (66), and
the stopper cover (67) is attached to the front stay (66).

6. The front portion structure of a saddle-ride type vehicle according to any one of claims 4 and 5, wherein
the front stay (66) includes a front-stay base portion (78) fastened to the head pipe (21) and protruding substantially to the front of the vehicle, and a front-stay upward-extending portion (79) extending upward from a front end portion of the front-stay base portion (78),
the stopper cover (67) is attached to the front-stay base portion (78), and the flexible member (73, 74) is routed in such a manner as to pass below the front-stay base portion (78).

7. The front portion structure of a saddle-ride type vehicle according to any one of claims 4 to 6, wherein the stopper cover (67) is substantially C-shaped, with the C open to the rear of the vehicle when the handlebar (46) is viewed in an axial direction thereof.

## Patentansprüche

1. Eine Vorderbereichsstruktur eines Fahrzeugs vom Sattelfahrtyp, umfassend ein in einem Karosserierahmen (11) bereitgestelltes Lenkkopfrohr (21), eine Lenkwelle (41), die rotierbar von dem Lenkkopfrohr (21) gelagert wird und eine Lenkerstange (46) an einem oberen Ende der Lenkwelle (41) befestigt hat, ein Brückenelement (44), das an einem unteren Endbereich der Lenkwelle (41) bereitgestellt ist, ein Gabelelement (45), das sich von dem Brückenelement (44) erstreckt und ein Vorderrad (13) lagert, einen Lenkeranschlag (101 L, 101 R), der von einer Position auf dem Brückenelement (44) nahe des Lenkkopfrohrs (21) nach oben hervorsteht und eingerichtet ist, um einen Lenkwinkel der Lenkerstange (46) durch Berührung des Karosserierahmens (11) einzuschränken, und ein flexibles Element (73, 74), das sich von Einrichtungen rund um die Lenkerstange (46) über dem Lenkeranschlag (101 L, 101 R) erstreckt und mit Einrichtungen verbunden ist, die auf einer Karosserieseite bereitgestellt sind, wobei
eine Anschlagabdeckung (67), die zwischen dem Lenkeranschlag (101 L, 101 R) und dem flexiblen Element (73, 74) bereitgestellt und eingerichtet ist, um das flexible Element (73, 74) weg von dem Lenkeranschlag (101 L, 101 R) zu führen, an dem Karosserierahmen (11) oder dem Brückenelement (44) befestigt ist;
**dadurch gekennzeichnet, dass** die Anschlagabdeckung (67) eine abgeschrägte Vorderseite (92) hat, die in einer Richtung nach oben zunehmend der Lenkwelle (41) angenähert wird.

2. Die Vorderbereichsstruktur eines Fahrzeugs vom Sattelfahrtyp nach Anspruch 1, wobei die Anschlagabdeckung (67) die Form eines Bogens mit Mittelpunkt auf der Lenkwelle (41) hat.

3. Die Vorderbereichsstruktur eines Fahrzeugs vom Sattelfahrtyp nach Anspruch 1 oder Anspruch 2, wobei die Anschlagabdeckung (67) einen Flanschbereich (91) entlang eines unteren Kantenbereichs der Anschlagabdeckung (67) hat, welcher Flanschbereich (91) sich in radialer Richtung nach außen erstreckt.

4. Die Vorderbereichsstruktur eines Fahrzeugs vom Sattelfahrtyp nach einem der Ansprüche 1 bis 3, wobei
das Fahrzeugs vom Sattelfahrtyp eine vordere Haube (51) umfasst, die einen vorderen Bereich des Lenkkopfrohrs (21) abdeckt,
eine vordere Halterung (66) lösbar an dem Lenkkopfrohr (21) befestigt ist,
die vordere Haube (51) von der vorderen Halterung (66) gelagert wird, und
die Anschlagabdeckung (67) an der vorderen Halterung (66) befestigt ist.

5. Die Vorderbereichsstruktur eines Fahrzeugs vom Sattelfahrtyp nach einem der Ansprüche 1 bis 4, wobei
das Fahrzeugs vom Sattelfahrtyp einen Scheinwerfer (61) vor dem Lenkkopfrohr (21) umfasst,
die vordere Halterung (66) lösbar an dem Lenkkopfrohr (21) befestigt ist,
der Scheinwerfer (61) von der vorderen Halterung (66) gelagert wird, und
die Anschlagabdeckung (67) an der vorderen Halterung (66) befestigt ist.

6. Die Vorderbereichsstruktur eines Fahrzeugs vom Sattelfahrtyp nach einem der Ansprüche 4 und 5, wobei
die vordere Halterung (66) einen Basisbereich (78) der vorderen Halterung, der an dem Lenkkopfrohr (21) festgemacht ist und im Wesentlichen zur Vorderseite des Fahrzeugs hin hervorsteht, und einen sich nach oben erstreckenden Bereich (79) der vorderen Halterung der sich von einem vorderen Endbereich des Basisbereichs (78) der vorderen Halterung nach oben erstreckt, umfasst,
die Anschlagabdeckung (67) an dem Basisbereich (78) der vorderen Halterung befestigt ist, und
das flexible Element (73, 74) in einer derartigen Weise gelegt ist, dass es unterhalb des Basisbereichs (78) der vorderen Halterung verläuft.

7. Die Vorderbereichsstruktur eines Fahrzeugs vom Sattelfahrtyp nach einem der Ansprüche 4 bis 6, wobei
die Anschlagabdeckung (67) im Wesentlichen C-förmig ist, wobei das C zu der Hinterseite des Fahrzeugs offen ist, wenn die Lenkerstange (46) in einer axialen Richtung derselben betrachtet wird.

## Revendications

1. Structure de partie avant d'un véhicule de type à selle incluant une colonne de direction (21) disposée dans un châssis de carrosserie de véhicule (11), un arbre de direction (41) supporté en rotation par la colonne de direction (21) et ayant un guidon (46) attaché à une extrémité supérieure de l'arbre de direction (41), un élément formant pont (44) disposé au niveau d'une partie d'extrémité inférieure de l'arbre de direction (41), un élément formant fourche (45) s'étendant à partir de l'élément formant pont (44) et supportant une roue avant (13), une butée de guidon (101L, 101R) dépassant vers le haut à partir d'une position sur l'élément formant pont (44) près de la colonne de direction (21) et configuré pour limiter un angle de direction du guidon (46) en entrant en contact avec le châssis de carrosserie de véhicule (11), et un élément souple (73, 74) s'étendant à partir de l'équipement autour du guidon (46) au-dessus de la butée de guidon (101L, 101R) et relié à l'équipement disposé sur un côté carrosserie de véhicule, dans laquelle
un couvercle de butée (67), disposé entre la butée de guidon (101L, 101R) et l'élément souple (73, 74) et configuré pour guider l'élément souple (73, 74) loin de la butée de guidon (101L, 101R), est attaché au châssis de carrosserie de véhicule (11) ou à l'élément formant pont (44) ;
**caractérisé en ce que** le couvercle de butée (67) a une face tronconique (92) qui est progressivement rendue proche de l'arbre de direction (41) dans un sens ascendant.

2. Structure de partie avant d'un véhicule de type à selle selon la revendication 1, dans laquelle le couvercle de butée (67) a une forme d'arc centrée sur l'arbre de direction (41).

3. Structure de partie avant d'un véhicule de type à selle selon l'une quelconque de la revendication 1 ou la revendication 2, dans laquelle le couvercle de butée (67) a une partie formant bride (91) le long d'une partie formant bord inférieur du couvercle de butée (67), la partie formant bride (91) s'étendant vers l'extérieur dans une direction radiale.

4. Structure de partie avant d'un véhicule de type à selle selon l'une quelconque des revendications 1 à 3, dans laquelle
le véhicule de type à selle inclut un capot avant (51) couvrant une partie avant de la colonne de direction (21),
un appui avant (66) est attaché de façon amovible à la colonne de direction (21),
le capot avant (51) est supporté par l'appui avant (66), et
le couvercle de butée (67) est attaché à l'appui avant (66).

5. Structure de partie avant d'un véhicule de type à selle selon l'une quelconque des revendications 1 à 4, dans laquelle
le véhicule de type à selle inclut un phare (61) devant la colonne de direction (21),
l'appui avant (66) est attaché de façon amovible à la colonne de direction (21),
le phare (61) est supporté par l'appui avant (66), et
le couvercle de butée (67) est attaché à l'appui avant (66).

6. Structure de partie avant d'un véhicule de type à selle selon l'une quelconque des revendications 4 et 5, dans laquelle
l'appui avant (66) inclut une partie de base d'appui avant (78) attaché à la colonne de direction (21) et dépassant sensiblement vers l'avant du véhicule, et une partie s'étendant vers le haut d'appui avant (79) s'étendant vers le haut à partir d'une partie d'extrémité avant de la partie de base d'appui avant (78),
le couvercle de butée (67) est attaché à la partie de base d'appui avant (78), et
l'élément souple (73, 74) est acheminé d'une telle façon qu'il passe au-dessous de la partie de base d' appui avant (78).

7. Structure de partie avant d'un véhicule de type à selle selon l'une quelconque des revendications 4 à 6, dans laquelle le couvercle de butée (67) est sensiblement en forme de C, le C étant ouvert vers l'arrière du véhicule lorsque l'on regarde le guidon (46) dans sa direction axiale.
